# EUROPEAN PATENT SPECIFICATION

(11) **EP 2 367 023 B1**
(45) Date of publication and mention of the grant of the patent: **28.01.2015**
(21) Application number: 10156813.7
(22) Date of filing: 17.03.2010
(51) Int. Cl.: G01S 19/07, G01S 19/15, G01S 19/40

(54) **Aircraft landing system using relative GNSS**
Système d'atterrissage d'avion au moyen de GNSS relative
Flugzeuglandesystem mit relativer GNSS

(43) Date of publication of application: 21.09.2011
(73) Proprietor: CMC Electronics Inc., Ville St-Laurent, Québec H4M 2S9 (CA)
(72) Inventor: Studenny, John, Montréal, Québec H1X 2V5 (CA); Domey, Daniel, Town of Mont Royal, Québec H3P 1Z4 (CA)
(74) Representative: Driver, Virginia Rozanne

(56) References cited:
- US-A- 5 714 948
- US-A- 5 786 773

## Description

### TECHNICAL FIELD

The present invention relates to the field of aircraft landing systems, and in particular, to aircraft landing systems when there is no known survey point for the mobile base station.

### BACKGROUND

GPS as a stand-alone system is known to have several deficiencies that prevent it from enabling aircraft precision approach.

Lack of positional accuracy and integrity. Sources of error are known to be at least satellite clock alignment error, ephemeris error, and error due to signal propagation through the atmosphere. These errors can introduce several meters of error in an aircraft's position. Uncertainty of these errors contribute to the lack of system integrity, which is required to enable precision approach. Such errors must be corrected in real time to enable precision approach where there is little or no visibility.

In the case where GPS experiences sudden system accuracy corruption, GPS lacks the ability to immediately detect such accuracy corruption and provide the immediate alerts. For example, Instrument Landing Systems self-monitor and will shut-down immediately if signal corruption is detected. That is, they prevent Hazardously Misleading Information from being transmitted to the aircraft in "real-time". GPS as a stand-alone system has no such ability for real-time self-monitoring that would enable aircraft precision approach.

Since GPS alone is unable to provide the sufficient accuracy and integrity to enable an aircraft to perform a precision approach, it needs to be augmented. Several augmentations are known at this time: Ground-Based Augmentation System (GBAS) and Space-Based Augmentation System (SBAS). The specific implementations in North America are known as LAAS and WAAS respectively. These GPS augmentation systems were developed to provide high accuracy and high integrity system solutions that enable aircraft to perform precision approaches. In all cases, these precision approach solutions apply to known, pre-surveyed, final approach segments to fixed terrain and provide sufficient accuracy and integrity to enable the aircraft to perform a precision approach.

The Ground-Based Augmentation System (GBAS) is an all-weather aircraft landing system based on real-time differential correction of a Global Positioning System (GPS) signal; the Local Area Augmentation System (LAAS) is one implementation of GBAS and GPS is one satellite constellation forming the Global Navigation Satellite System (GNSS). A GBAS ground station is installed at a known and fixed site and transmits differential GPS (DGPS) corrections to be applied to an aircraft. The ground GPS antenna location has been surveyed and certified at a fixed site, and the corrections are based on the surveyed and motionless antenna.

The data link between the LAAS ground station and the LAAS avionics is called a Very High Frequency Data Broadcast (VDB) data link. The LAAS ground transmitter is called a VDB transmitter and the LAAS avionics receiver is called a VDB receiver. The final approach segment is a known and surveyed approach. This final approach segment data is transmitted on the VDB data link.

The Spaced-Based Augmentation System (SBAS) is an all-weather aircraft navigation and landing system based on real-time differential correction of a Global Positioning System (GPS) signal; the Wide Area Augmentation System (WAAS) is one implementation of SBAS. A network of SBAS ground stations is installed at known and fixed sites and transmits differential GPS (DGPS) corrections to be applied to an aircraft. As in the case of GBAS, the final approach segment is a known and surveyed approach. This final approach segment data is stored in a database and is used when the approach is selected by the pilot.

Reference is made to US 5786773 which is an evolution of the DGPS system where the true position of the ground station GPS antenna must be surveyed and fixed on a stationary ground station to produce differential corrections, detect errors, and provide navigation data comprising the absolute aircraft position. The basic operating principle of the DGPS ground station in this document is the computation of differential corrections based on using the a priori knowledge of the true and stationary GPS antenna position, and then transmitting these corrections to an airborne receiver.

Reference is also made to US 5714948 which describes an air traffic control facility with a known location, which also corresponds to a previous surveyed location. This system uses a stand alone GPS or a standard DGPS system. The document describes a standard airborne technique of comparing absolute position of two navigation sources to detect navigation errors before using the navigation data in other airborne systems (such as the air traffic system).

Within their coverage and applicability areas, both SBAS and GBAS provide the capability for the corresponding SBAS and/or GBAS receiver to accurately determine the position/location of the aircraft with integrity. However, when an aircraft must land in an area without a pre-surveyed point, such as in a rescue operation on a mountain, or on a mobile platform, such as a floating oil rig, or approach a mobile platform, such as an airborne tanker for refueling, it is no longer possible to use GBAS or SBAS since both systems are based on the final approach being specified with respect to known, previously surveyed, stationary earth-fixed point from which integrity and differential corrections are derived.

Therefore, there is a need to adapt aircraft landing systems such that they may be used on moving platforms and/or on a fixed ground station without a previously surveyed location, while providing the required accuracy, and more importantly, the required integrity that enables aircraft precision approach.

### SUMMARY

The system described herein is based on Relative GNSS (RGNSS), such that integrity is provided for the RGNSS aircraft landing system. This includes airborne aircraft rendezvous since the principles apply to both moving and earth-fixed base stations. The mobile base station is understood to be installed on a moving or ground-fixed platform that the aircraft will either approach or land on. Furthermore, the mobile base station will provide the aircraft final approach segment or the data required to construct it, among other data, to the aircraft.

In accordance with a first broad aspect, there is provided an aircraft landing system comprising: at least two mobile base station GNSS antennae at known fixed distances for receiving signals from a GNSS satellite constellation; a mobile base station module operatively connected to the at least two mobile base station GNSS antennae and adapted to receive GNSS signals from the at least two GNSS antennae, extract measurement data therefrom, and determine relative positions of the GNSS antennae for specifying an approach path with respect to the relative positions of the mobile base station GNSS antennae, the mobile base station module also adapted to calculate a measured distance between the at least two mobile base station GNSS antennae using the relative positions and compare the measured distance with the known fixed distance to determine mobile base station integrity; and a data transmitter for transmitting to an aircraft mobile base station integrity data, approach path data, and GNSS measurement data for at least one of the at least two mobile base station GNSS antennae.

In one embodiment, the aircraft landing system also comprises an air GNSS antenna for receiving signals from the GNSS satellite constellation; an air data receiver for receiving the mobile base station integrity data, the approach path data, and the measurement data; and an air module connected to the data receiver and to the air GNSS antenna and adapted to extract and validate satellite data from the GNSS satellite constellation signals, determine a relative position of the air GNSS antenna to the at least one of the at least two mobile base station antennae using the extracted satellite data, the mobile base station measurement data, and the mobile base station integrity data, and determine approach guidance for the aircraft using the relative position of the air GNSS antenna to the at least one of the at least two mobile base station antennae and the approach path data.

In accordance with a second broad aspect, there is provided a method for confirming mobile base station integrity in a relative GNSS aircraft landing system, the method comprising: determining a relative position of a first GNSS antenna fixed to the mobile base station with respect to a second GNSS antenna also fixed to the mobile base station by processing signals from a GNSS satellite constellation; calculating a distance between the first GNSS antenna and the second GNSS antenna using the measured relative position; comparing a calculated distance to a known fixed distance; and confirming mobile base station integrity if the calculated distance is within a predetermined threshold of the known fixed distance.

In accordance with a third broad aspect, there is provided a method for aircraft approach and landing using relative GNSS positioning, the method comprising: determining relative positions of at least two mobile base station GNSS antennae provided at a known fixed distance; determining an approach path relative to the at least two mobile base station GNSS antennae; confirming mobile base station integrity by comparing a measured distance between the mobile base station GNSS antennae with the known fixed distance; transmitting to an aircraft the mobile base station integrity data, approach path data, and satellite measurement data for one of the at least two mobile base station GNSS antennae; receiving the mobile base station integrity data, the approach path data, and the satellite measurement data at the aircraft; determining a relative position with integrity of an air GNSS antenna on the aircraft with respect to one of the at least two mobile base station GNSS antennae using combined satellite measurements from the air antenna and the mobile base station antenna; and determining approach guidance using the relative position of the air and mobile base station GNSS antennae and the approach path data.

### BRIEF DESCRIPTION OF THE DRAWINGS

Further features and advantages of the present invention will become apparent from the following detailed description, taken in combination with the appended drawings, in which:
Fig. 1 illustrates an aircraft landing system with mobile base station and air portion, in accordance with one embodiment;
Fig. 2 illustrates the aircraft landing system of figure 1 with a mobile base station system closed loop check, in accordance with one embodiment;
Fig. 3 illustrates an embodiment of the mobile base station portion of the aircraft landing system of figure 1, where the two GPS receiver antennae are provided on a single landing system mobile base station unit;
Fig. 4 is a block diagram of a VDB transmitter, in accordance with one embodiment;
Fig. 5 is a block diagram of a VDB receiver, in accordance with one embodiment;
Fig. 6 is a block diagram of a landing system mobile base station unit, in accordance with one embodiment;
Fig. 7 is a block diagram of a landing system air unit, in accordance with one embodiment;
Fig. 8 is a block diagram of a mobile base station computer, in accordance with one embodiment;
Fig. 9 is a flowchart illustrating a method for confirming mobile base station integrity in a relative GNSS aircraft landing system, in accordance with one embodiment; and
Fig. 10 is a flowchart illustrating a method for aircraft approach and landing using relative GPS, in accordance with one embodiment.
It will be noted that throughout the appended drawings, like features are identified by like reference numerals.

### DETAILED DESCRIPTION

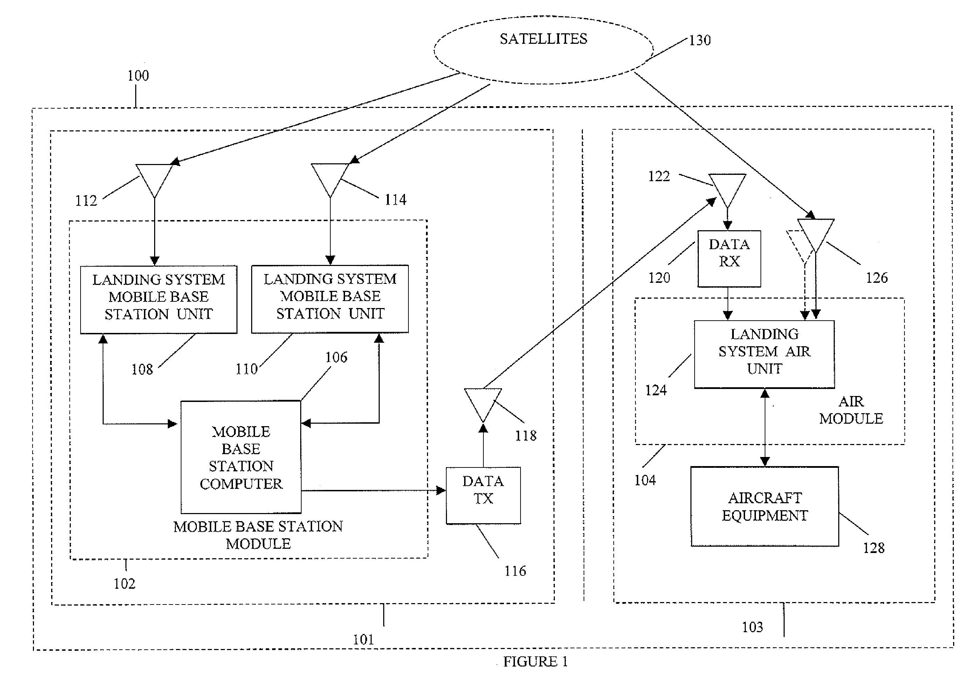

Figure 1 illustrates an exemplary embodiment of an aircraft landing system 100, also referred to as Relative GNSS (Global Navigation Satellite System) Aircraft Landing System (RGLS). The system 100 consists of a mobile base station portion 101 and an air portion 103. The mobile base station portion 101 is found either on a mobile platform, such as an oil rig or another type of platform on water, in the air, or on fixed ground. The air portion 103 is provided in any type of aircraft, such as a helicopter, a commercial airplane, a cargo airplane, a recreational airplane, etc.

A mobile base station module 102 is provided as the central part of the mobile base station portion 101. The mobile base station module 102 is operatively connected to a pair of mobile base station GPS antennae 112, 114 and adapted to receive GPS signals, extract measurement data, and determine the positions of the GPS antennae 112, 114 either as absolute positions or relative to one another or both. The mobile base station module 102 is also adapted to calculate a measured distance between the two mobile base station GPS antennae 112, 114 using their respective absolute or relative positions and compare the measured distance with a known and fixed distance to determine mobile base station integrity.

In one embodiment, the mobile base station module 102 comprises a mobile base station computer 106. The mobile base station computer 106 is responsible for data collecting, processing, and distributing as will be explained in more detail below. A first landing system mobile base station unit 108 is connected to the mobile base station computer 106 via a wired or wireless connection. The landing system mobile base station unit 108 is connected to a first GPS antenna 112. A second landing system mobile base station unit 110 is also connected to the mobile base station computer 106, via a wired or wireless connection. A second GPS antenna 114 is connected to the second landing system mobile base station unit 110.

GPS antenna 112 and GPS antenna 114 are provided at a fixed distance. They both receive signals from a satellite constellation 130 in order to quickly and accurately determine the latitude, the longitude, and the altitude of the point at their respective antenna sites. Alternatively, the landing system units combine the information distributed by the mobile base station computer with its own satellite signal measurements to determine the relative position of the mobile base station antennae in a manner similar to a landing system air unit 124. The known distance between the two antennae 112, 114 is compared with the calculated distance between the two measured positions obtained individually via the satellites 130 or with the calculated distance obtained from the measured relative position provided by one or both landing system units. Mobile base station integrity is therefore obtained when the calculated distance and the known distance match within a pre-determined threshold. The determination of integrity and/or determination of positions may be done in the mobile base station computer 106 or in the landing system mobile base station units 108, 110.

Also present in the mobile base station portion 101 of the system 100 is a data transmitter 116 used to transmit data to the air portion 103 of the system 100. In one embodiment, data received by the data transmitter 116 from the mobile base station computer 106 is modulated such that it may be sent via Radio Frequency (RF) signals, using an RF antenna 118. In one embodiment, the data transmitter is a Very High Frequency (VHF) Data Broadcast (VDB) unit that transmits in the VHF band between 108HZ-118Hz using a format compatible with the LAAS VBD ICD RTCA/DO-246C.

The air portion 103 of the system 100 comprises a data receiver 120 equipped with an RF antenna 122 for receiving the signals sent by the data transmitter 116. Once received, the signals are demodulated by the data receiver 120 and sent to an air module 104, which comprises a landing system air unit 124. In one embodiment, a LAAS VBD receiver serves as the data receiver. The air module 104 is connected to a GPS antenna 126 that receives signals from a satellite constellation 130 to determine the latitude, longitude, and altitude of the aircraft. A relative position of the aircraft is determined using the data received from the satellite constellation 130 and the information from the data receiver 120. In one embodiment, a landing system unit 124 extracts the appropriate information from the received data and sends it to various aircraft equipment.

As in the case of the Mobile Base Station, airborne integrity may be derived in a manner identical to the Mobile Base Station Module 101. This can be done by installing at least two GPS antennae 126 on the aircraft and measuring the distances between these GPS antennae 126, and providing this information to the landing system air unit 124. The methodology for determining airborne integrity would be identical to the mobile base station module 101.

The satellite measurement data of the antenna on the aircraft 122 and of the antennae 112, 114 on the mobile base station are used in a relative manner to allow the aircraft to land on the mobile platform. Conceptually, one GPS antenna 112 on the mobile base station is used as the approach landing point (or end point) on the mobile base station. The other GPS antenna 114 on the mobile base station is used to define an approach vector from GPS antenna 112 to GPS antenna 114. This approach vector may be used to define approach path azimuth, approach path elevation, or both, and an approach landing point and direct the aircraft in its approach. In practice, the approach path is constructed relative to this vector, translated and rotated as appropriate to the geography of the area. Several such relative approach paths can be so constructed to allow landing under various conditions such as different wind speed and direction. When multiple approach paths are transmitted, the pilot selects the appropriate path in the air module. Alternatively, the air module can construct the path based on raw approach data from the base station and pilot input of relevant data such as wind speed.

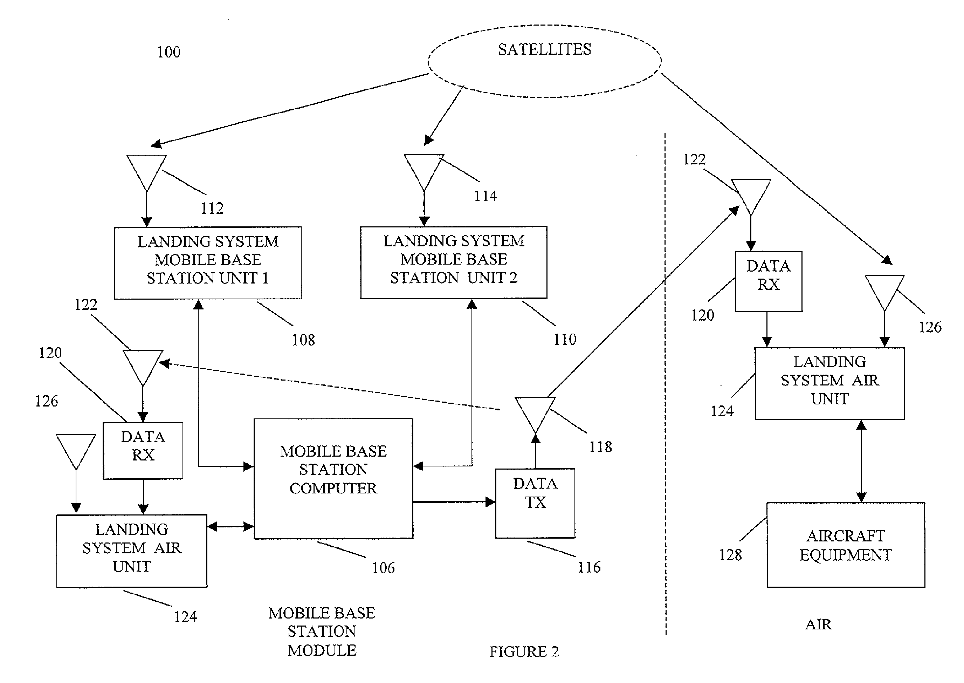

Figure 2 illustrates another embodiment of the aircraft landing system 100, whereby a mobile base station system closed loop check is provided. In this embodiment, a replica of the data receiver 120 with its RF antenna 122 and the landing system air unit 124 with its GPS antenna 126 is also provided on the mobile base station in order to confirm the data sent by the mobile base station portion 101 to the air portion 103. As RF antenna 118 sends out its modulated signal, it will be received by the RF antenna 122 on the aircraft as well as antenna 122 on the mobile base station. The modulated data will be demodulated by the data receiver 120 on the mobile base station in the same way that it is demodulated in the air, and it will be transmitted to the landing system air unit 124 on the mobile base station. This air unit will validate the data and can transmit to the mobile base station computer 106 statistics on the received data like the number and type of messages received and any message decoding errors. This will allow the mobile base station computer to report on the health of the data transmission and shut off the transmission as required. In another embodiment (not illustrated), the data will return to the mobile base station computer 106 directly from the data receiver 120 on the mobile base station and it can be compared with the original sent data to confirm that the data received by the aircraft is indeed the intended data.

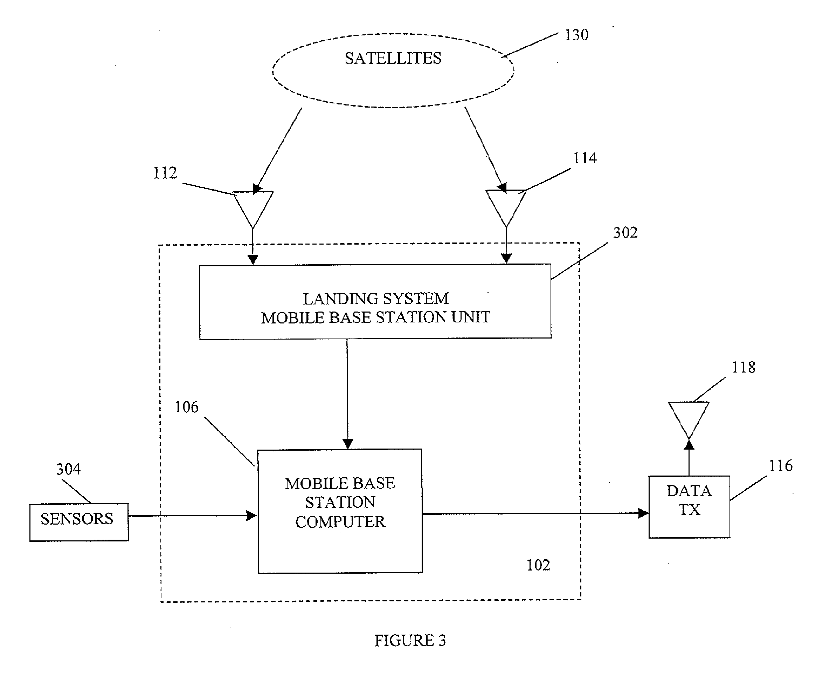

Figure 3 illustrates only the mobile base station portion 101 of the system 100. In the embodiment illustrated, a single landing system mobile base station unit 302 is provided in the mobile base station module 102, with GPS antenna 112 and GPS antenna 114 provided thereon separated by a fixed distance. The mobile base station computer 106 is the central processing unit for the measurements provided by the landing system mobile base station unit 302, the external sensors 304, and any operator input to produce the data for the data transmitter 13.6. As stated above, the calculations based on received data may be performed either in the landing system mobile base station unit 302 or in the mobile base station computer 106.

In another alternative embodiment, the mobile base station module 102 may consist of only a single integrated unit (not shown) adapted to perform all of the functions of the mobile base station computer 106 and the landing system mobile base station unit 302, or of two landing system mobile base station units 108, 110 as illustrated in figure 1, with all of the functions and capabilities of the mobile base station computer 106 integrated in one or both of the landing system mobile base station units 108, 110.

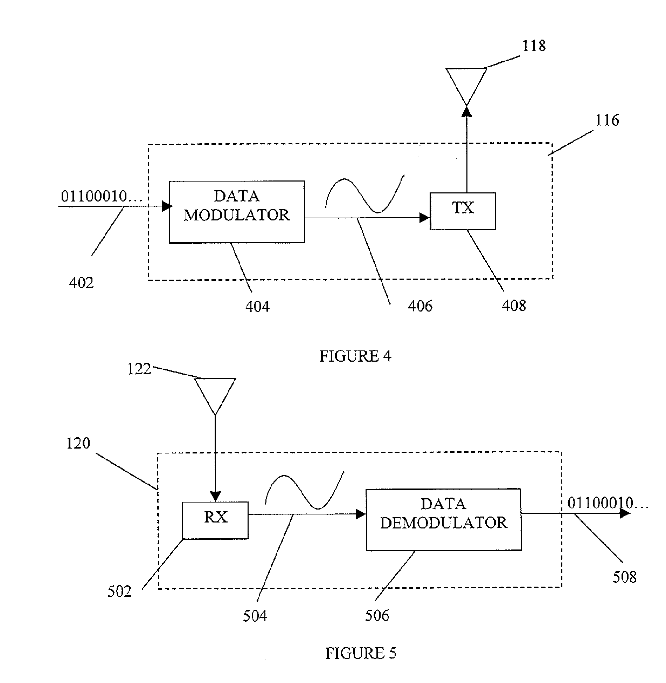

Figure 4 is a block diagram illustrating an embodiment of the data transmitter 116. In one embodiment, data transmitter 116 is a basic coder/modulator which can convert digital data into an analog (modulated-wave) signal suitable for RF transmission. A digital signal 402 is received from the mobile base station computer 106 and a data modulator 404 converts the signal 402 into a modulated analog signal 406. The analog signal 406 is sent to transmitter 408 for transmission via the RF antenna 118.

Various types of data may be provided in the digital signal 402 to be sent to the aircraft. In addition to the mobile base station integrity data, the mobile base station satellite measurement data, and the approach path data, other types of data such as weather data (for example the wind direction and speed, and current visibility), platform orientation (roll, pitch, yaw), multiple approach paths, platform outline and salient features (heliport location, main obstructions), magnetic variation, and mobile base station operator messages may also be embedded in the data. The sensors 304 illustrated in figure 3 can be a source of this additional digital data. An interface to the mobile base station computer like a keyboard can also be provided for operator messages.

Figure 5 is block diagram of the data receiver 120 found in the air portion 103 of the system 100. Similarly to the data transmitter 116, a basic demodulator/decoder adapted for data demodulation may be used. An RF signal 504 is received by a receiver 502 via RF antenna 122 and sent to a data demodulator 506. A digital signal 508, i.e. a series of decoded bits matching digital signal 402 is output from the data receiver 120.

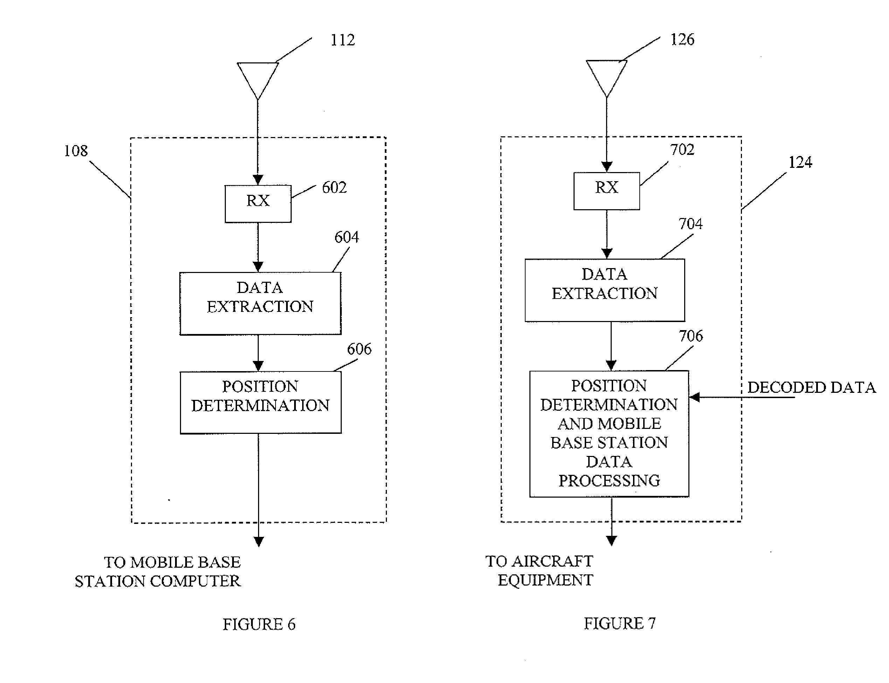

Figure 6 is a block diagram illustrating an exemplary embodiment of landing system mobile base station unit 108. A GPS antenna 112 receives an RF signal from the satellite constellation 130 via receiver 602. This signal is sent to a data extraction module 604, where measurement data such as pseudo-ranges, carrier cycles, ephemeris, and satellite position, is extracted therefrom. The extracted data is sent to a position determination module 606, whereby the position of antenna 112 is calculated and sent to the mobile base station computer 106 along with the satellite measurement data. In an alternative embodiment, extracted data is sent directly to the mobile base station computer 106 and position determination is performed therein.

In one embodiment, the landing system air unit 124 is a GPS Landing System Sensor Unit (GLSSU) per ARINC characteristic 743B augmented to perform the relative positioning function. The landing system air unit 124 may be designed to meet all requirements applicable to airborne equipment such as TSO-C145c Beta-3, TSO-C146c Delta-4, and TSO-C161a. As such, it would be designed to meet FAA certification FAR Part-25, RTCA/DO-178B Level B and RTCA/DO-254 Level B requirements, RTCA/DO-160E environmental requirements.

Landing system mobile base station units 108 and/or 110 may be a replica of the landing system air unit 124 or it may have alternative and/or additional features and capabilities. Replicating the air unit 124 within the mobile base station module 102 provides a convenient way for one mobile base station module 102 to receive data from the second mobile base station air unit 124 via the mobile base station computer 106 in order to compute the relative position of the two mobile base station GPS antennae. In such an embodiment, the mobile base station computer need only compare this relative position to the fixed distance between these antennae in order to confirm mobile base station module integrity, as described above.

Figure 7 is a block diagram illustrating an exemplary embodiment of landing system air unit 124. Similarly to landing system mobile base station unit 108, an RF signal is received from the satellite constellation 130 via GPS antenna 126 to receiver 702. The received signal is sent to data extraction module 704 and extracted data is then sent on to position determination module 706, which also receives the decoded data from the data receiver 120. The position determination module 706 applies an integrity algorithm to the received satellite signals, computes the relative position of the airborne antenna with respect to the mobile base station antenna and provides guidance along the specified approach path. The integrity algorithm may be augmented by the same type of RGNSS integrity computation as used in the mobile base station using the known distances between the airborne antennae 126. As indicated above, the decoded data may contain various types of information, such as mobile base station operator messages, weather data, etc. This additional data is processed into a format appropriate for use by other aircraft equipment.

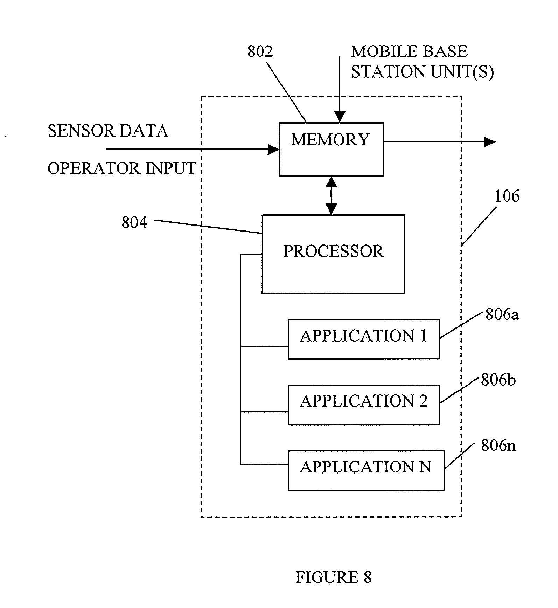

Figure 8 is a diagram illustrating an exemplary embodiment for the mobile base station computer 106. Various types of data, such as sensor data, operator inputs, mobile base station unit data, etc, may be received by the mobile base station computer 106 and stored in a memory 802. A processor 804 can access the memory 802 to retrieve the stored data. A plurality of applications 806a, 806b, 806n are running on the processor 804. One application may be used to establish mobile base station integrity, as described above. This application uses the measured relative positions of antenna 112 and antenna 114 as input, as well as the known fixed distance between antenna 112 and antenna 114. A statistical threshold may be used to determine whether there is integrity or not. Another application of the mobile base station computer 106 may be used to package platform orientation data in order to send it to the aircraft. Yet another application may be used to construct the approach path (with operator assistance as needed) at the desired location with respect to the position of GPS antenna 112 to ensure that the aircraft properly aligns itself during landing. Various other applications will be readily understood by the person skilled in the art. Data to be sent to the data receiver 120 may be retrieved from memory 802.

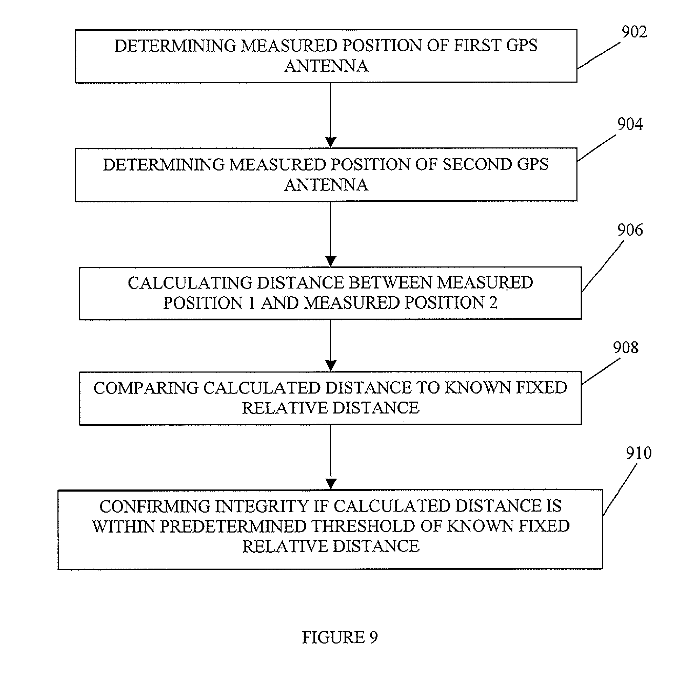

Figure 9 is a flowchart illustrating a method for confirming mobile base station integrity, in accordance with one embodiment. In the first steps 902, 904, measured positions of a first GPS antenna and a second GPS antenna are determined. The two GPS antennae are at a known fixed distance from each other. Determining their measured positions may be done using any of the embodiments described above, such as receiving satellite signals, extracting data from the signals, and calculating the respective positions of the GPS antennae. The positions may be calculated using various information, such as pseudo-range and/or carrier cycle measurements of the signal, ephemeris, satellite location, etc.

In a following step 906, a distance between the first GPS antenna and the second GPS antenna is calculated. This distance is calculated using the two measured positions previously determined. As described previously, another embodiment (not illustrated) directly determines the relative position of the two antennae from the combination of satellite measurements from both GPS antennae; this relative position is then used to compute the distance between the two antennae. The calculated distance is then compared with the known fixed distance 908. Mobile base station integrity is confirmed when the calculated distance and the known fixed distances are within a predetermined threshold value of each other 910.

This method may be used to confirm mobile base station integrity in the case of a mobile platform, such as an oil rig, or in an area where no pre-surveyed point can be used. Mobile base station integrity data may be transmitted to an aircraft indicating whether or not mobile base station integrity is confirmed and also providing satellite specific integrity information. The integrity data can be sent with other data typically transmitted to an aircraft, such as the pseudo-range measurements to the GPS satellites, weather data, approach path, platform orientation, etc.

Persons skilled in the art will recognize that the satellite measurements will normally be taken simultaneously within each GPS antenna on the mobile base station 112, 114 and in the air 122 but that the measurement time for each antenna may be different. Some advantage may be gained by making measurements simultaneous between mobile base station antennae especially in a moving platform but such a measurement method is optional.

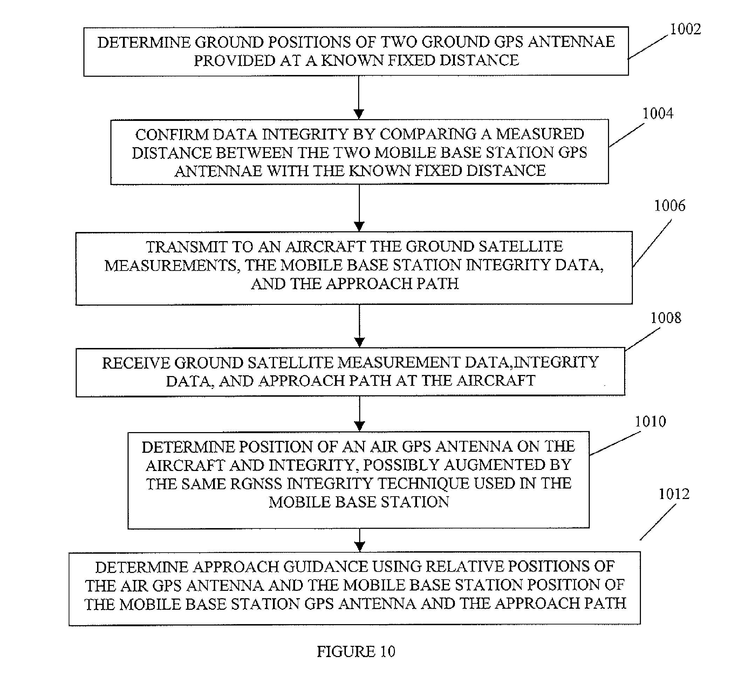

Figure 10 is a flowchart of a method for aircraft approach and landing using relative GPS. The first step consists in determining mobile base station positions (absolute and/or relative) of the two mobile base station GPS antennae that are provided at a known fixed distance 1002. Once this information is obtained, mobile base station integrity is confirmed by comparing the measured distance between the two GPS antennae to the known fixed distance 1004. The mobile base station satellite measurement data, the approach path data, and the mobile base station integrity data are transmitted to an aircraft 1006. This information is received at the aircraft 1008. A GPS antenna on the aircraft is used to receive the signals from the satellite constellation, apply an integrity algorithm, possibly apply the same type of integrity algorithm employed in the mobile base station, and determine its relative position to the mobile base station antenna 1010. Approach guidance is determined using this relative position and the relative approach path received from the mobile base station 1012 in a manner that cancels any common mode errors in the satellite measurements to the air and mobile base station antennae.

RGLS is based on relative GNSS positioning (guidance to the mobile base station antenna regardless of motion or location of the mobile base station), not differential GPS (DGPS). No mobile base station position pre-survey is required and corrections per se are not transmitted. Actual mobile base station satellite measurements and a relative approach path definition are transmitted in support of relative GNSS positioning. This avoids significant certification and installation issues. In addition, weather data such as wind speed, wind direction, and visibility data may be transmitted from the mobile base station to the aircraft. Platform attitude and orientation, as well any operator message may also be transmitted from the mobile base station.

The embodiments described above consist of only two GPS antennae 112, 114 connected to landing system mobile base station units 108, 110. This represents a minimum configuration and is used as an example for its simplicity. Further advantages may be derived from multiple GPS antennae with respect to determining mobile base station integrity and approach path definition. The basic concept for determining mobile base station integrity in a timely fashion is the use of two mobile base station antennae at a fixed known relative position from one another. This known relative position can be limited to only the distance between the two antennae or include two or three-dimensional offset. There is no requirement for the absolute position of these antennae to be provided to the mobile base station by means of a survey or any other process that the mobile base station cannot perform on its own.

With respect to the air portion 103 of the system 100, the RGLS function may be enabled within WAAS/LAAS equipment. The same data receivers as those used in LAAS may be used to enable the RGLS function as well. With respect to the mobile base station portion 101 of the system 100, Flight Management System (FMS) hardware may be used as the mobile base station computer 106.

In one embodiment, landing system air unit 124 is designed to operate using LAAS and/or WAAS (Wide Area Augmentation System) infrastructure and may be selectively set for LAAS, WAAS, or RGLS. The single unit may be used as a primary means of navigation.

The embodiments described above discuss the use of GPS satellites however the same principles apply to the use of SBAS or Galileo satellites or any other satellite system that provide signals for safety of life aircraft operations generally known as Global Navigation Satellite Systems (GNSS). Nothing herein should be interpreted to limit this invention to the sole use of the GPS satellite constellation or even require the use of any particular satellite constellation or combination thereof.

While illustrated in the block diagrams as groups of discrete components communicating with each other via distinct data signal connections, it will be understood by those skilled in the art that the embodiments are provided by a combination of hardware and software components, with some components being implemented by a given function or operation of a hardware or software system, and many of the data paths illustrated being implemented by data communication within a computer application or operating system. The structure illustrated is thus provided for efficiency of teaching the present preferred embodiment.

It should be noted that the present invention can be carried out as a method, can be embodied in a system, a computer readable medium or an electrical or electro-magnetic signal. The embodiments of the invention described above are intended to be exemplary only. The scope of the invention is therefore intended to be limited solely by the scope of the appended claims.

## Claims

1. An aircraft landing system comprising:
at least two mobile base station GNSS antennae (112,114)having a known fixed distance (908) therebetween for receiving signals from a GNSS satellite constellation (130);
a mobile base station module (102) comprising a processor (804) and connected to receive GNSS signals from the at least two GNSS antennae (112,114), the module (102) configured to:
process the GNSS signals to extract a relative position of the at least two mobile base station GNSS antennae;
calculate a distance between the at least two mobile base station GNSS antennae using the measured relative position;
compare a calculated distance to the known fixed distance; and
produce integrity data indicating whether or not mobile base station integrity is confirmed, wherein mobile base station integrity is confirmed if the calculated distance is within a predetermined threshold of the known fixed distance;
a data transmitter (116) for transmitting to an aircraft the mobile base station integrity data, approach path data, and GNSS satellite measurement data for at least one of the at least two mobile base station antennae (112,114);
an air GNSS antenna (126) for locating in an aircraft to receive signals from the GNSS satellite constellation (130);
an air data receiver (120) for receiving the mobile base station integrity data, the approach path data, and the GNSS satellite measurement data; and
an air module (104) connected to the data receiver (120) and to the air GNSS antenna (126) and adapted to extract satellite data from the GNSS satellite constellation (130) signals, determine a relative position of the air GNSS antenna (126) using the extracted satellite data, the mobile base station GNSS satellite measurement data, and the mobile base station integrity data, and determine approach guidance for the aircraft using the relative position of the air GNSS antenna (126) and the approach path data.

2. The aircraft landing system (100) of claim 1, further comprising at least one other air antenna (126) located at a known and fixed distance from the air GNSS antenna (126) on the aircraft.

3. The aircraft landing system of claim 1, wherein a replica of the air GNSS antenna (126), the data receiver (120), and the air module (104) are provided on the mobile base station connected to the mobile base station module (102) and act as a confirmation of data transmitted by the data transmitter.

4. The aircraft landing system (100) of claim 1, further comprising:
a set of mobile base station sensors (304) providing data to the mobile base station;
an air data receiver (120) adapted to decode the sensor data; and
an air module (104) adapted to transmit the sensor data to one or more aircraft equipment (128).

5. The aircraft landing system of claim 4, wherein at least one of the sensors (304) is adapted to accept operator messages for transmission to the air module (104).

6. The aircraft landing system of claim 1, wherein the at least two mobile base station GNSS antennae (112, 114), the mobile base station module (102), and the data transmitter (116) are portable for rapid deployment.

7. The aircraft landing system (100) of claim 1, wherein the mobile base station module (102) comprises:
a first landing system mobile base station unit (108) having at least one of the at least two mobile base station GNSS antennae (112, 114) attached thereto; and
a second landing system mobile base station unit (110) having another of the at least two mobile base station GNSS antennae (112, 114) attached thereto.

8. The aircraft landing system (100) of claim 7, wherein the mobile base station module (102) comprises a mobile base station computer (106) operatively connected between the first landing system mobile base station unit (108), the second landing system mobile base station unit (110), and the data transmitter (116), the mobile base station computer (106) comprising the processor (804) which is configured to calculate the distance between the at least two mobile base station GNSS antennae (112,114) and compare the measured distance with the known and fixed distance.

9. The aircraft landing system (100) of claim 1, wherein the mobile base station module comprises:
a landing system mobile base station unit (302) having more than one of the at least two mobile base station GNSS antennae (112, 114) attached thereto; and
a mobile base station computer (106) comprising the processor (804) which is configured to calculate the distance between the mobile base station GNSS antennae (112, 114) and compare the measured distance with the known and fixed distance.

10. The aircraft landing system (100) of claim 1, wherein the air module (104) is adapted to transmit data to at least one aircraft equipment (128).

11. The aircraft landing (100) system of claim 1, wherein the air module (104) may selectively be set for relative GNSS use and Ground-Based Augmentation System (GBAS) use and the air data receiver (120) is adapted to receive both RGNSS and GBAS data wherein the air module (104) may also selectively be set for Space-Based Augmentation System (SBAS) use.

12. A method for aircraft approach and landing using relative GNSS positioning, the method comprising:
determining relative positions of at least two mobile base station GNSS antennae provided at a known fixed distance and receiving signals from a GNSS satellite constellation;
determining an approach path relative to the at least two mobile base station GNSS antennae;
confirming mobile base station integrity by comparing a measured distance between the mobile base station GNSS antenna with the known fixed distance;
transmitting to an aircraft the mobile base station integrity data, approach path data, and GNSS satellite measurement data for one of the at least two mobile base station GNSS antennae;
receiving the mobile base station integrity data, the approach path data, and the GNSS satellite measurement data at the aircraft;
determining a relative position with integrity of an air GNSS antenna on the aircraft with respect to one of the at least two mobile base station GNSS antennae using GNSS satellite measurement data from the air antenna and the mobile base station antenna; and
determining approach guidance using the relative position of the air and mobile base station GNSS antennae and the approach path data.

13. The method of claim 12, wherein determining an approach path comprises:
using one of the at least two mobile base station GNSS antennae as an approach end point;
using another of the at least two mobile base station GNSS antennae to trace a vector between the at least two mobile base station GNSS antennae (112, 114);
applying a translation and rotation to the vector; and
expressing the approach path as a path relative to the position of one of the at least two mobile base station GNSS antennae (112, 114).

14. The method of claim 12, wherein determining approach guidance comprises using the relative position of the air GNSS antenna (126) in combination with the approach path data relative to a same mobile base station GNSS antenna in a way to cancel any common mode errors in the GNSS satellite measurement data to the air and mobile base station antennae.

15. The method of claim 12, wherein determining relative position with integrity comprises computing the relative position in a way to cancel any common mode errors in the GNSS satellite measurement data to the air and mobile base station antennae, and using integrity data transmitted from a mobile base station.

16. The method of claim 12, further comprising enhancing integrity by applying base station sensor (304) data to a position solution.

17. The method of claim 12, further comprising receiving the signals from the GNSS satellite constellation (130) using at least two GNSS antennae (112, 114), wherein the measured distance between several pairs of GNSS antennae is compared to their known fixed distances; and confirming mobile base station integrity if the calculated distances are within a predetermined threshold of the known fixed distances.

18. The method of claim 12, wherein a difference between the known fixed relative position of the two GNSS antennae (112, 114) and the measured relative position is compared with predetermined difference thresholds to confirm mobile base station integrity.

19. The method of claim 12, wherein transmitting mobile base station integrity data comprises modulating the integrity data onto an RF signal and transmitting the RF signal.

20. The method of claim 12, wherein determining a relative position of the two fixed GNSS antennae (112, 114) comprises measuring the position of a first fixed GNSS antenna (112) by receiving signals through the first antenna from the GNSS satellite constellation (130), extracting data from the satellite signals, and calculating the position of the first fixed GNSS antenna based on measurements of the satellite signals; and measuring the position of a second fixed GNSS antenna (114) by receiving signals through the second antenna from the GNSS satellite constellation (130), extracting data from the satellite signals, and calculating the position of the second fixed GNSS antenna (114) based on measurements of the satellite signals; and computing an offset between the two measured positions to obtain the relative position.

21. The method of claim 12, wherein determining a relative position of the two fixed GNSS antennae (112,114) comprises receiving signals through the first antenna (112) from the GNSS satellite constellation (130), extracting data from the satellite signals, and making measurements of the satellite signals; and receiving signals through the second antenna (114) from the GNSS satellite constellation (130), extracting data from the satellite signals, and making measurements of the satellite signals; and calculating the relative position of the two GNSS antennae (112, 114) based on a combination of both sets of measurements of the satellite signals taken from each antenna.

## Patentansprüche

1. Flugzeuglandesystem, umfassend:
Wenigstens zwei GNSS-Antennen (112, 114) mobiler Basisstation mit einer bekannten festen Distanz (908) dazwischen zum Empfangen von Signalen von einer GNSS-Satellitenkonstellation (130);
ein mobiles Basisstationsmodul (102), das einen Prozessor (804) umfasst und angeschlossen ist, GNSS-Signale von den wenigstens zwei GNSS-Antennen (112, 114) zu empfangen, wobei das Modul (102) konfiguriert ist:
Die GNSS-Signale zu verarbeiten, um eine relative Position der wenigstens zwei GNSS-Antennen mobiler Basisstation zu extrahieren;
eine Distanz zwischen den wenigstens zwei GNSS-Antennen mobiler Basisstation unter Verwendung der gemessenen relativen Position zu berechnen;
eine berechnete Distanz mit der bekannten festen Distanz zu vergleichen; und
Integritätsdaten zu produzieren, die anzeigen, ob Integrität der mobilen Basisstation bestätigt ist oder nicht, wobei die Integrität der mobilen Basisstation bestätigt ist, wenn die berechnete Distanz innerhalb eines vorgegebenen Schwellenwerts der bekannten festen Distanz liegt;
einen Datensender (116) zum Senden der Integritätsdaten der mobilen Basisstation, Daten der Anflugbahn und GNSS-Satellitenmessdaten für wenigstens eine der wenigstens zwei Antennen (112, 114) mobiler Basisstation;
eine luftgestützte GNSS-Antenne (126) zur Positionierung in einem Flugzeug, um Signale von der GNSS-Satellitenkonstellation (130) zu empfangen;
einen luftgestützten Datenempfänger (120) zum Empfangen von Integritätsdaten der mobilen Basisstation, der Anflugbahndaten und der GNSS-Satellitenmessdaten; und
ein luftgestütztes Modul (104), das an den Datenempfänger (120) und an die luftgestützte GNSS-Antenne (126) angeschlossen und angepasst ist, Satellitendaten aus den Signalen der GNSS-Satellitenkonstellation (130) zu extrahieren, eine relative Position der luftgestützten GNSS-Antenne (126) unter Verwendung der extrahierten Satellitendaten, der GNSS-Satellitenmessdaten der mobilen Basisstation und der Integritätsdaten der mobilen Basisstation zu ermitteln und Anflugführung für das Flugzeug unter Verwendung der relativen Position der luftgestützten GNSS-Antenne (126) und der Anflugbahndaten zu ermitteln.

2. Flugzeuglandesystem (100) nach Anspruch 1, das ferner wenigstens eine andere luftgestützte Antenne (126) umfasst, die in einer bekannten und festen Distanz von der luftgestützten GNSS-Antenne (126) am Flugzeug positioniert ist.

3. Flugzeuglandesystem nach Anspruch 1, wobei ein Nachbau der luftgestützten GNSS-Antenne (126), des Datenempfängers (120) und des luftgestützten Moduls (104) an der mobilen Basisstation bereitgestellt sind, die an das Modul (102) der mobilen Basisstation angeschlossen sind und als eine Bestätigung von Daten fingieren, die vom Datensender gesendet wurden.

4. Flugzeuglandesystem (100) nach Anspruch 1, ferner umfassend:
Einen Satz Sensoren (304) der mobilen Basisstation, die der mobilen Basisstation Daten bereitstellen;
einen luftgestützten Datenempfänger (120), der angepasst ist, die Sensordaten zu decodieren; und
ein luftgestütztes Modul (104), das angepasst ist, die Sensordaten an eine oder mehr Flugzeugausrüstungen (128) zu senden.

5. Flugzeuglandesystem nach Anspruch 4, wobei wenigstens einer der Sensoren (304) angepasst ist, Operator-Mitteilungen zur Übertragung an das luftgestützte Modul (104) zu akzeptieren.

6. Flugzeuglandesystem nach Anspruch 1, wobei die wenigstens zwei GNSS-Antennen (112, 114) der mobilen Basisstation, das Modul (102) der mobilen Basisstation und der Datensender (116) zur schnellen Anwendung tragbar sind.

7. Flugzeuglandesystem (100) nach Anspruch 1, wobei das Modul (102) der mobilen Basisstation umfasst:
Eine erste mobile Basisstationseinheit (108) für das Landesystem mit wenigstens einer der wenigstens zwei GNSS-Antennen (112, 114) der mobilen Basisstation, die daran angebracht sind; und
eine zweite mobile Basisstationseinheit (110) für das Landesystem mit einer weiteren der wenigstens zwei GNSS-Antennen (112, 114) der mobilen Basisstation, die daran angebracht sind.

8. Flugzeuglandesystem (100) nach Anspruch 7, wobei das Modul (102) der mobilen Basisstation einen Computer (106) der mobilen Basisstation umfasst, der betriebsfähig zwischen der ersten mobilen Basisstationseinheit (108) für das Landesystem, der zweiten mobilen Basisstationseinheit (110) für das Landesystem und dem Datensender (116) verbunden ist, wobei der Computer (106) der mobilen Basisstation den Prozessor (804) umfasst, der konfiguriert ist, die Distanz zwischen den wenigstens zwei GNSS-Antennen (112, 114) der mobilen Basisstation zu berechnen und die gemessene Distanz mit der bekannten und festen Distanz zu vergleichen.

9. Flugzeuglandesystem (100) nach Anspruch 1, wobei das Modul der mobilen Basisstation umfasst:
Eine mobile Basisstationseinheit (302) für das Landesystem mit mehr als einer der wenigstens zwei GNSS-Antennen (112, 114) der mobilen Basisstation, die daran angebracht sind; und
einen Computer (106) für die mobile Basisstation, der den Prozessor (804) umfasst, der konfiguriert ist, die Distanz zwischen den GNSS-Antennen (112, 114) der mobilen Basisstation zu berechnen und die gemessene Distanz mit der bekannten und festen Distanz zu vergleichen.

10. Flugzeuglandesystem (100) nach Anspruch 1, wobei das luftgestützte Modul (104) angepasst ist, Daten an wenigstens eine Flugzeugausrüstung (128) zu senden.

11. Flugzeuglandesystem (100) nach Anspruch 1, wobei das luftgestützte Modul (104) selektiv für jeweiligen GNSS-Gebrauch und Gebrauch für das "Ground-Based Augmentation System (GBAS) bzw. bodengestützte Ergänzungssystem eingestellt werden kann und der luftgestützte Datenempfänger (120) angepasst ist, sowohl RGNSS- als auch GBAS-Daten zu empfangen, wobei das luftgestützte Modul (104) auch selektiv zum Gebrauch für das "Space-Based Augmentation System" (SBAS) eingestellt werden kann.

12. Verfahren für Anflug und Landung eines Flugzeugs unter Verwendung relativer GNSS-Positionierung, wobei das Verfahren umfasst:
Ermitteln relativer Positionen von wenigstens zwei GNSS-Antennen einer mobilen Basisstation, die in einer bekannten festen Distanz bereitgestellt sind und Empfangen von Signalen ab einer GNSS-Satellitenkonstellation;
Ermitteln einer Anflugbahn relativ zu den wenigstens zwei GNSS-Antennen einer mobilen Basisstation;
Bestätigen der Integrität der mobilen Basisstation durch Vergleichen einer gemessenen Distanz zwischen der GNSS-Antenne der mobilen Basisstation mit der bekannten festen Distanz; Senden der Integritätsdaten der mobilen Basisstation, Anflugbahndaten und GNSS-Satellitenmessdaten für eine der wenigstens zwei GNSS-Antennen der mobilen Basisstation an ein Flugzeug;
Empfangen der Integritätsdaten der mobilen Basisstation, der Anflugbahndaten und der GNSS-Satellitenmessdaten im Flugzeug;
Ermitteln einer relativen Position mit Integrität einer luftgestützten GNSS-Antenne am Flugzeug in Bezug auf eine der wenigstens zwei GNSS-Antennen der mobilen Basisstation unter Verwendung der GNSS-Messdaten von der luftgestützten Antenne und der Antenne der mobilen Basisstation; und
Ermitteln der Anflugführung unter Verwendung der relativen Position der luftgestützten und GNSS-Antennen der mobilen Basisstation und der Anflugbahndaten.

13. Verfahren nach Anspruch 12, wobei das Ermitteln einer Anflugbahn umfasst:
Verwenden einer der wenigstens zwei GNSS-Antennen der mobilen Basisstation als einen Endpunkt des Anflugs;
Verwenden einer weiteren der wenigstens zwei GNSS-Antennen der mobilen Basisstation zum Verfolgen eines Vektors zwischen den wenigstens zwei GNSS-Antennen (112, 114) der mobilen Basisstation;
Anwenden einer Translation und Rotation auf den Vektor; und
Ausdrücken der Anflugbahn als eine Bahn relativ zur Position einer der wenigstens zwei GNSS-Antennen (112, 114) der mobilen Basisstation.

14. Verfahren nach Anspruch 12, wobei das Ermitteln der Anflugführung die Verwendung der relativen Position der luftgestützten GNSS-Antenne (126) in Kombination mit den Anflugbahndaten relativ zu einer gleichen GNSS-Antenne der mobilen Basisstation gewissermaßen umfasst, um irgendwelche Gleichtaktfehler in den GNSS-Satellitenmessdaten zu den Antennen der luftgestützten und der mobilen Basisstation zu canceln.

15. Verfahren nach Anspruch 12, wobei das Ermitteln der relativen Position mit Integrität das Berechnen der relativen Position, gewissermaßen um irgendwelche Gleichtaktfehler in den GNSS-Satellitenmessdaten zu den luftgestützten und den mobilen Basisstationsantennen zu canceln, und die Verwendung der von einer mobilen Basisstation gesendeten Integritätsdaten umfasst.

16. Verfahren nach Anspruch 12, das ferner die Verbesserung der Integrität durch Anwenden von Daten des Basisstationssensors (304) auf eine Positionslösung umfasst.

17. Verfahren nach Anspruch 12, das ferner das Empfangen der Signale von der GNSS-Satellitenkonstellation (130) unter Verwendung von wenigstens zwei GNSS-Antennen (112, 114) umfasst, wobei die gemessene Distanz zwischen mehreren Paaren von GNSS-Antennen mit ihren bekannten festen Distanzen verglichen wird; und Bestätigen der mobilen Basisstationsintegrität, wenn die berechneten Distanzen innerhalb eines vorgegebenen Schwellenwerts der bekannten festen Distanzen liegen.

18. Verfahren nach Anspruch 12, wobei eine Differenz zwischen der bekannten festen relativen Position of der zwei GNSS-Antennen (112, 114) und der gemessenen relativen Position mit vorgegebenen Differenz-Schwellenwerten verglichen wird, um die Integrität der mobilen Basisstation zu bestätigen.

19. Verfahren nach Anspruch 12, wobei das Senden der Integritätsdaten der mobilen Basisstation das Modulieren der Integritätsdaten auf ein auf ein HF-Signal und Senden des HF-Signals umfasst.

20. Verfahren nach Anspruch 12, wobei das Ermitteln einer relativen Position der zwei festen GNSS-Antennen (112, 114) das Messen der Position einer ersten festen GNSS-Antenne (112) durch Empfangen von Signalen durch die erste Antenne von der GNSS-Satellitenkonstellation (130), das Extrahieren von Daten aus den Satellitensignalen und das Berechnen der Position der ersten festen GNSS-Antenne beruhend auf Messungen der Satellitensignale umfasst; und das Messen der Position einer zweiten festen GNSS-Antenne (114) durch Empfangen von Signalen durch die zweite Antenne von der GNSS-Satellitenkonstellation (130), das Extrahieren von Daten aus den Satellitensignalen und das Berechnen der Position der zweiten festen GNSS-Antenne (114) beruhend auf Messungen der Satellitensignale umfasst; und das Berechnen eines Offsets (Versatzes) zwischen den zwei gemessenen Positionen umfasst, um die relative Position zu erhalten.

21. Verfahren nach Anspruch 12, wobei das Ermitteln einer relativen Position der zwei festen GNSS-Antennen (112, 114) das Empfangen von Signalen durch die erste Antenne (112) von der GNSS-Satellitenkonstellation (130), das Extrahieren von Daten aus den Satellitensignalen und das Vornehmen von Messungen der Satellitensignale umfasst; und das Empfangen von Signalen durch die zweite Antenne (114) von der GNSS-Satellitenkonstellation (130), das Extrahieren von Daten aus den Satellitensignalen und das Vornehmen von Messungen der Satellitensignale umfasst; und das Berechnen der relativen Position der zwei GNSS-Antennen (112, 114) beruhend auf einer Kombination beider Sätze von Messungen der von jeder Antenne genommenen Satellitensignale umfasst.

## Revendications

1. Système d'atterrissage pour avions comportant:
au moins deux antennes GNSS (112, 114) de la station de base mobile qui sont séparées d'une distance fixe connue (908) et qui servent à recevoir des signaux venant d'une constellation de satellites GNSS (130);
une station de base mobile sous forme de module (102), comprenant un processeur (804) et connectée de manière à recevoir des signaux GNSS venant des antennes GNSS au nombre minimum de deux (112, 114), le module (102) étant configuré de manière:
à traiter les signaux GNSS afin d'extraire une position relative pour les antennes GNSS de la station de base mobile au nombre minimum de deux;
à calculer la distance entre les antennes GNSS de la station de base mobile au nombre minimum de deux au moyen de la position relative mesurée;
à comparer la distance calculée à la distance fixe connue; et
à produire des données d'intégrité indiquant si l'intégrité de la station de base mobile est confirmée ou non, **caractérisé en ce que** l'intégrité de la station de base mobile est confirmée si la distance calculée se touve comprise dans un seuil prédéterminé par rapport à la distance fixe connue;
un transmetteur de données (116) servant à transmettre à un avion les données d'intégrité de la station de base mobile, les données sur la trajectoire d'approche, et les mesures satellitaires GNSS pour au moins l'une des antennes de la station de base mobile au nombre minimum de deux (112, 114);
une antenne GNSS de bord (126) servant à recevoir les signaux qui proviennent de la constellation de satellites GNSS (130);
un récepteur de données de bord (120) servant à recevoir les données d'intégrité de la station de base mobile, les données sur la trajectoire d'approche, et les mesures satellitaires GNSS; et
un module de bord (104) connecté au récepteur de données (120) et à l'antenne GNSS de bord (126), et adapté de manière à extraire les données satellitaires des signaux de la constellation de satellites GNSS (130), à déterminer la position relative de l'antenne GNSS de bord (126) en se servant pour cela des données satellitaires extraites, des mesures satellitaires GNSS de la station de base mobile, et des données d'intégrité de la station de base mobile, et à déterminer le guidage d'approche de l'avion en utilisant la position relative de l'antenne GNSS de bord (126) et aussi les données sur la trajectoire d'approche.

2. Système d'atterrissage pour avions (100) selon la revendication 1, comportant par ailleurs au moins une autre antenne de bord (126) située à une distance connue et fixe par rapport à l'antenne GNSS (126) à bord de l'avion.

3. Système d'atterrissage pour avions selon la revendication 1, **caractérisé en ce qu'**un deuxième exemplaire de l'antenne GNSS (126) de bord, du récepteur de données (120), et du module de bord (104) est prévu dans la station de base mobile qui est connectée à la station de base mobile sous forme de module (102), pour confirmer les données transmises par le transmetteur de données.

4. Système d'atterrissage pour avions (100) selon la revendication 1, comportant par ailleurs:
un ensemble de capteurs (304) de la station de base mobile qui servent à envoyer des données à la station de base mobile;
un récepteur de données de bord (120) adapté de manière à décoder les données des capteurs; et
un module de bord (104) adapté de manière à transmettre les données des capteurs à un ou plusieurs équipements de bord (128).

5. Système d'atterrissage pour avions selon la revendication 4, **caractérisé en ce qu'**au moins l'un des capteurs (304) est adapté de manière à accepter les messages de l'opérateur qui sont ensuite transmis au module de bord (104).

6. Système d'atterrissage pour avions selon la revendication 1, **caractérisé en ce que** les antennes GNSS au nombre minimum de deux (112, 114) de la station de base mobile, la station de base mobile sous forme de module (102) et le transmetteur de données (116) sont transportables et peuvent être déployés rapidement.

7. Système d'atterrissage pour avions (100) selon la revendication 1, **caractérisé en ce que** la station de base mobile sous forme de module (102) comporte:
une première unité (108) de station de base mobile pour système d'atterrissage comprenant au moins l'une des antennes GNSS au nombre minimum de deux (112, 114) de la station de base mobile qui y est fixée; et
une deuxième unité (110) de station de base mobile pour système d'atterrissage comprenant la deuxième des antennes GNSS au nombre minimum de deux (112, 114) de la station de base mobile qui y est fixée.

8. Système d'atterrissage pour avions (100) selon la revendication 7, **caractérisé en ce que** la station de base mobile sous forme de module (102) comprend un ordinateur (106) de la station de base mobile qui est raccordé opérationnellement entre la première unité (108) de la station de base mobile pour système d'atterrissage, la deuxième unité (110) de la station de base mobile pour système d'atterrissage, et le transmetteur de données (116), l'ordinateur (106) de la station de base mobile comprenant le processeur (804) qui est configuré de manière à calculer la distance entre les antennes GNSS (112, 114) au nombre minimum de deux de la station de base mobile, puis à comparer la distance mesurée à la distance connue et fixe.

9. Système d'atterrissage pour avions (100) selon la revendication 1, **caractérisé en ce que** la station de base mobile sous forme de module comprend:
une unité (302) de la station de base mobile pour système d'atterrissage équipée de plus d'une des antennes GNSS (112, 114) au nombre minimum de deux de la station de base mobile qui y sont fixées; et
un ordinateur (106) de la station de base mobile comprenant le processeur (804) qui est configuré de manière à calculer la distance entre les deux antennes GNSS (112, 114) de la station de base mobile, puis à comparer la distance mesurée à la distance connue et fixe.

10. Système d'atterrissage pour avions (100) selon la revendication 1, **caractérisé en ce que** le module de bord (104) est adapté de manière à transmettre les données au moins à l'un des équipements de bord (128).

11. Système d'atterrissage pour avions (100) selon la revendication 1, **caractérisé en ce que** le module de bord (104) peut être réglé sélectivement selon le système GNSS relatif et selon le système GBAS (système d'augmentation au sol), et le récepteur de données de bord (120) est adapté de manière à recevoir les données RGNSS (GNSS relatif) et GBAS, **caractérisé en ce que** le module de bord (104) peut lui aussi être réglé sélectivement selon le système SBAS (système d'augmentation dans l'espace).

12. Procédé d'approche et d'atterrissage des avions faisant appel au positionnement du système GNSS relatif, le procédé consistant:
à déterminer les positions relatives des antennes GNSS au nombre minimum de deux de la station de base mobile, disposées à une distance fixe connue et recevant les signaux qui proviennent d'une constellation de satellites GNSS;
à déterminer une trajectoire d'approche par rapport aux antennes GNSS au nombre minimum de deux de la station de base mobile;
à confirmer l'intégrité de la station de base mobile en comparant une distance mesurée entre les antennes GNSS de la station de base mobile à la distance fixe connue;
à transmettre à l'avion les données d'intégrité de la station de base mobile, les données sur la trajectoire d'approche, et les mesures satellitaires GNSS pour l'une des au antennes GNSS au nombre minimum de deux de la station de base mobile;
à recevoir, au niveau de l'avion, les données d'intégrité de la station de base mobile, les données sur la trajectoire d'approche, et les mesures satellitaires GNSS ;
à déterminer une position relative avec intégrité d'une antenne GNSS à bord de l'avion par rapport à l'une des antennes GNSS au nombre minimum de deux de la station de base mobile, en utilisant les mesures satellitaires GNSS obtenues de l'antenne de bord et des antennes de la station de base mobile; et
à déterminer le guidage d'approche en utilisant la position relative de l'antenne de bord et des antennes GNSS de la station de base mobile ainsi que les données sur la trajectoire d'approche.

13. Procédé selon la revendication 12, **caractérisé en ce que** la détermination d'une trajectoire d'approche consiste:
à utiliser l'une des antennes GNSS au nombre minimum de deux de la station de base mobile en tant que point terminal de l'approche;
à utiliser la deuxième des antennes GNSS au nombre minimum de deux de la station de base mobile pour tracer un vecteur entre les antennes GNSS (112, 114) au nombre minimum de deux de la station de base mobile;
à appliquer une translation et une rotation au vecteur; et
à exprimer la trajectoire d'approche comme étant une trajectoire par rapport à la position de l'une des antennes GNSS (112, 114) au nombre minimum de deux de la station de base mobile.

14. Procédé selon la revendication 12, **caractérisé en ce que** la détermination du guidage d'approche consiste à utiliser la position relative de l'antenne GNSS de bord (126) et aussi des données sur la trajectoire d'approche par rapport à une même antenne GNSS de la station de base mobile, de manière à annuler toutes erreurs en mode commun qui se produiraient éventuellement dans les mesures satellitaires GNSS envoyées aux antennes de bord et de la station de base mobile.

15. Procédé selon la revendication 12, **caractérisé en ce que** la détermination de la position relative avec intégrité consiste à calculer la position relative de manière à annuler toutes erreurs en mode commun qui se produiraient éventuellement dans les mesures satellitaires GNSS envoyées aux antennes de bord et de la station de base mobile, et à utiliser les données d'intégrité transmises à partir d'une station de base mobile.

16. Procédé selon la revendication 12, consistant par ailleurs à augmenter l'intégrité en appliquant les données du capteur (304) de la station de base à une solution de position.

17. Procédé selon la revendication 12, consistant par ailleurs à recevoir les signaux venant de la constellation de satellites GNSS (130) en utilisant au moins deux antennes GNSS (112, 114), **caractérisé en ce que** la distance mesurée entre plusieurs paires d'antennes GNSS est comparée à la distance fixe et connue qui les sépare; et à confirmer l'intégrité de la station de base mobile si les distances calculées se trouvent comprises dans un seuil prédéterminé par rapport aux distances fixes et connues.

18. Procédé selon la revendication 12, **caractérisé en ce que** la différence entre la position relative fixe et connue des deux antennes GNSS (112, 114) et la position relative mesurée est comparée à des seuils prédéterminés de différence pour confirmer l'intégrité de la station de base mobile.

19. Procédé selon la revendication 12, **caractérisé en ce que** la transmission des données d'intégrité de la station de base mobile consiste entre autres à moduler les données d'intégrité en un signal RF et à transmettre le signal RF.

20. Procédé selon la revendication 12, **caractérisé en ce que** la détermination de la position relative des deux antennes GNSS fixes (112, 114) consiste entre autres à mesurer la position d'une première antenne GNSS fixe (112) en recevant, au moyen de la première antenne, les signaux qui proviennent de la constellation de satellites GNSS (130), à extraire les données des signaux satellitaires, et à calculer la position de la première antenne GNSS fixe selon les mesures des signaux satellitaires; et à mesurer la position d'une deuxième antenne GNSS fixe (114) en recevant, au moyen de la deuxième antenne, les signaux qui proviennent de la constellation de satellites GNSS (130), à extraire les données des signaux satellitaires, et à calculer la position de la deuxième antenne GNSS fixe (114) selon les mesures des signaux satellitaires; puis à calculer un décalage entre les deux positions mesurées afin d'obtenir la position relative.

21. Procédé selon la revendication 12, **caractérisé en ce que** la détermination de la position relative des deux antennes GNSS fixes (112, 114) consiste entre autres à recevoir, au moyen de la première antenne (112), les signaux qui proviennent de la constellation de satellites GNSS (130), à extraire les données des signaux satellitaires, et à mesurer les signaux satellitaires; et aussi à recevoir, au moyen de la deuxième antenne (114), les signaux qui proviennent de la constellation de satellites GNSS (130), à extraire les données des signaux satellitaires, et à mesurer les signaux satellitaires; enfin à calculer la positon relative des deux antennes GNSS (112, 114) selon une combinaison des deux ensembles de mesures des signaux satellitaires obtenus de chaque antenne.
